# EUROPEAN PATENT APPLICATION

(11) **EP 4 718 199 A1**
(43) Date of publication of application: **01.04.2026**
(21) Application number: 24166075.2
(22) Date of filing: 25.03.2024
(51) Int. Cl.: G05D 1/82

(54) **METHOD FOR GENERATING CONTROL LIMIT OUTPUTS FOR CONTROLLING AN AIRCRAFT**

(71) Applicant: Lilium GmbH, 82234 Wessling (DE)
(72) Inventor: Martinez, Vicente, 82234 Wessling (DE); Shields, Chris, 82234 Wessling (DE); Xiao, Sid, 82234 Wessling (DE); Bernes, Stephane, 82234 Wessling (DE); Falkenberg, Valentin, 82234 Wessling (DE)
(74) Representative: Ter Meer Steinmeister & Partner

(57) **Abstract**

The invention is related to a Method for generating control limit outputs (CLO) for controlling an aircraft (100), comprising the following steps:
- Determination of the present flight status (PFS) of the aircraft (100),
- Calculation of at least one present control limit (PCL) for a controllable flight parameter (CFP) of the aircraft (100) corelated with the determined present flight status (PFS),
- Providing a control limit output (CLO) based on the calculated at least one present control limit (PCL).

## Description

The present invention is related to a method for generating control limit outputs for controlling an aircraft, a computer program product for carrying out such a method as well as a limitation control device for carrying out such a method.

It is known that dependent on the flight status of an aircraft several controllable flight parameters are subject to limitation. To ensure a stable and consistent flight situation for example the pitch angle is limited and dependent from the forward speed of the aircraft. Further correlation is between the air pressure, the forward speed, the wind speed, the turbulences and further flight information related to controllable flight parameters. It is further commonly known that pilots are trained to take care of the present flight status and make sure that the controllable flight parameters will not leave a stable flight situation.

In automatic or part automatic control situations, for example drone flight devices or similar aircrafts, an automatic flight control is conducted. To provide this it is known that control limits are generated and calculated based on present flight situations. Therefore, commonly known automatic flight control systems are able to provide an automatic flight control automatically controlling the controllable flight parameters to keep a stable flight situation.

It is one disadvantage of commonly known control methods that the interaction between pilot for manual flying of an aircraft and the automatic control abilities are not completely transparent as to awareness of the pilot. For example, the pilot might not be aware of limitations of a present flight situation, which for example are related to a very specific type of aircraft, namely for example an electric aircraft, a vertical take-off and landing aircraft or the like.

It is therefore an object of the present invention to provide an increased stability of flying an aircraft in particular in situations wherein part automatic control is coordinated by a manual flight control of a pilot of the aircraft.

Aforesaid object is achieved by providing a method according to the features of independent claim 1, a computer program product with the features of independent claim 11 as well as a limitation control device with the features of independent claim 12. Further features and details of the inventions are resulting from the subclaims, the specification and the drawings. Further features and details, which are described in relation to the inventive method, can be combined with the respective features of the subclaims and vice versa of technical sense.

According to the present invention the method for generating control limit outputs for controlling an aircraft comprises the following steps:
- determination of the present flight status of the aircraft,
- calculation of a least one present flight control limit for a controllable flight parameter of the aircraft correlated with the determined present flight status,
- providing a control limit output based on the calculated at least one present control limit.

The present invention is particularly used in aircrafts having a control functionality combining an automatic control part and a manual control part being operated by the pilot of an aircraft. In such a situation at least parts of the control are carried out by this part automatic control functionality. In particular this is used by modern and complex aircrafts like electric aircrafts and/or vertical take-off and landing aircrafts. Modern aircraft technology includes new technology of propulsion as well as flight operation leading to new control habits which will be embedded in automatic or part automatic flight control systems. However, the pilots usually still have a hands on manual operation and will fly the aircraft as they are used to flying any regular and commonly known aircrafts by controlling typical controllable flight parameters like forward speed, flap angles or the like.

To ensure a safe and stable flight the flight control of those modern new aircrafts will determine a present flight status of an aircraft in a first step. The present flight status can for example be defined by internal or external parameters. Internal parameters can be considered as aircraft parameters like speed, angles, flap positions or similar parameters. External parameters can for example be turbulences, air pressure, wind speed or the like. All of those information and parameters can be combined to determine a present flight status of the aircraft.

Based on this determined present flight status of the aircraft the inventive method is now able to calculate at least one present control limit for at least one controllable flight parameter. That present control limit is a dynamic control limit and not a static control limit since this is determined and based on as well as correlated with the present flight status.

For example, an aircraft can have a maximum speed of 280 km/h. Depending on a flight situation, for example during a steep increase with a high pitch angle the aircraft reaches higher altitude in a short period of time. During that climbing operation as a present flight status the forward speed should not drop under a minimum level to keep the aerodynamic situation for the aircraft stable. In such a situation the present control limit can for example be calculated by an inventive method as a minimum speed for that present flight situation. Contrary to a completely static control limit this control limit will change, for example when the pilot changes and reduces the pitch angle of the aircraft to have a less speed increase of altitude. In this case the stability of the present flight status of the aircraft increases and the minimum speed of the aircraft to keep this stability in the present flight status can also be decreased. For example, in this case the minimum speed as a present control limit can be reduced from a 120 km/h to a 100 km/h. It has to be noted that the calculation does not yet lead to any interference of the automatic flight control with the manual flight control by the pilot. If the pilot will keep the speed in the mentioned example high enough, he might not recognize the calculation result at all. This is where the final step of the present invention provides its main benefit.

Since the present control limit is part of the automatic control functionality of the aircraft it is not yet present to the pilot. To ensure the information is gathering awareness of the pilot, the present invention provides a final step to generate and provide a control limit output which is based on the calculated at least one present control limit. While commonly known aircraft control systems usually are sufficiently equipped with calculating and keeping the present control limit no information is forwarded to the pilot of the aircraft. The present invention now comprises an additional step which allows a following method of the aircraft to transfer the information further to the pilot in any desired manner. The provided and calculated present control limit output can thereby in a following step be displayed, or in any other way sent and forwarded into the awareness of the pilot.

According to the present invention now two main steps are combined in one single method for controlling the aircraft. While it is based on commonly known steps of determining the present flight status and controlling a present control limit, now additionally a third step is conducted. In this third step the control limit output is provided in a way providing an interface for example to an information display unit to the pilot. That information can be displayed or in any other way be sensed by the pilot as an interface based on the output of the present invention. The control limit output thereby is in particular a digital signal resulting from conducting and executing the inventive method.

Referring back to the aforementioned example of a pitch angle, and minimum speed, the control limit output can be provided as a digital information piece for example including a no-go area below a 120 km/h. Therefore, that control limit output changes if the present control limit changes from a 120 km/h to a 100 km/h. Depending on the further use of the digital information for the control limit output it can comprise a specific value in terms of the threshold information, in this case 120 km/h. It can also comprise a margin information including the difference between the present speed and the limitation speed, for example the present speed being 140 km/h having a threshold of a 120 km/h for minimum speed resulting in a margin of 20 km/h being maximum reducible of the forward speed of the aircraft. Furthermore, the control limit output can comprise go areas or no-go areas to have an information piece for the pilot.

According to the present invention now the combination and correlation between the automatic part of the flight control and the manual operation of the pilot has an increased transparency. Due to the fact that the automatic part of the control system now enables and provides a control limit output, a further communication to the pilot of that control limit output is enabled. In other words, the pilot can be informed based on the provided and calculated control limit output about the present automatic result of the present control limit and thereby can take in to account the present flight situation as well as the present limitation situation to operate the aircraft. In further other words, the pilot will not be surprised by any limitation applied by the part automatic control system upon his manual operation of the aircraft.

It can be an advantage according to the present invention if the at least one present control limits is calculated for at least one of the following controllable flight parameters:
- engine rotation per minute,
- inclination angle of the aircraft,
- rotation angle of the aircraft,
- yaw angle of the aircraft,
- flap angle of the aircraft,
- vertical speed of the aircraft,
- horizontal speed of the aircraft.

Aforesaid list is non-limited. Of course, also different controllable flight parameters can be combined. In an advantage version of the present invention all controllable flight parameters are included in an inventive method. As it can be seen, indirect as well as direct information can be used as controllable flight parameters. While the horizontal speed of the aircraft can be directly measured it can be only indirectly controlled for example by the engine rotation per minute. If the engine rotation increases the horizontal speed increases. The vertical speed of the aircraft can also be directly measured but only indirectly be influenced again by changing the engine rotation per minute as well as the pitch and thereby inclination angle of the aircraft.

It can be a further advantage if according to the present invention the method is characterized in that the control limit output is provided in a perceptible form, being perceptible by a pilot of the aircraft with at least one of his senses. In particular in at least one of the following forms:
- tactile,
- visual,
- acoustic.

Aforesaid list is nonlimited. Of course, also a combination of different perceptible information and data forms can be possible. It is preferable to have at least a partly visual form of control limit output. The control limit output, for example having a value of a minimum speed for the aircraft in an inclination angle situation, can be displayed on a flight control display within the aircraft. Of course, the control limit output in form of the value can also be used to apply a sound to the pilot which increases speed or frequency when he approaches that minimum speed and thereby generating a warning awareness to the pilot. Additionally, or alternatively, it is also possible to apply a tactile, for example vibration signal resulting from the control limit output value to steering elements like joysticks or the like. As it is can be seen here, the kind and type of making the control limit output perceptible is independent from the inventive fact of providing the control limit output. The other way around the control limit output in form of a specific value for the relative controllable flight parameter is the basis to consider and conduct further steps of visualising and making that control limit output value perceptible to the pilot of the aircraft.

According to the present invention it can further be an advantage if the method is characterized in that at least one present control inputs is determined, in particular the position of at least one inceptor and the control limit output includes a correct correlation between the present control limit and the present control input. Whereas the general part of the inventive method is based on a passive generation of the control limit output this specific embodiment now additionally takes into account the desire of the pilot based on his present control input. Referring back to the example of increasing the altitude of the airplane by a specific pitch angle in a specific speed resulting in a minimum speed of 120 km/h as a present control limit the present control input can for example be the position of at least one inceptor of the aircraft use by the pilot which is moved in a position reducing the speed to a specific value. If that specific value would now reach the threshold defined by the control limit output in this case the value of a minimum speed of 120 km/h the control limit output would now include a correlation with that situation. The present control input, in particular the present value of the controllable flight parameter thereby can be defined in form of a margin between the present speed and the threshold speed defined by the control limit output. This can again in a further step be displayed on a visual display of the aircraft or in any other way moved to provide awareness for the pilot.

It is further an advantage if according to the present invention the method is characterized in that at least one present controllable flight parameter is determined and the control limit output includes a correlation between the present control limit and the present controllable flight parameter. Again, this can relate to a margin information showing a difference between the limitation value for example a minimum of 120 km/h of horizontal speed and the present speed of for example 140 km/h. The correlation between those values can for example be displayed as a margin of a maximum possible reduction of the difference of 20 km/h. The same can for example be applied to a control limit of the pitch angle. In the present situation by having constant speed of 140 km/h, for example the maximum pitch angle can be defined as 20 degrees. If the present pitch angle is calculated and determined to be 15 degrees, the final and remaining margin would be another additional 5 degrees until the control limit is reached and the control limit output can display that remaining margin to the pilot.

It is further an advantage if according to the present invention the method is characterized in that a change of the flight situation of the aircraft is determined and respectively a changed at least one present control limit is calculated, wherein the provided control limit comprises a change direction information correlated with a calculated change of the present control limit. As discussed further above, the present invention is related to a new dynamic way of calculating the present control limit and thereby also a dynamic way of providing the control limit output. This embodiment not only shows a dynamic change but also shows the direction of the change in form of a further information value being the change direction information. The change direction information adds further information data to the control limit output and thereby enriches the awareness of the pilot. Again, referring to the example further above a change of the pitch angle from 20 degrees to 15 degrees and thereby a reduction might result in a reduction of the threshold of the minimum speed of the aircraft. Thereby, a control input generated by the pilot to reduce the pitch angle of the aircraft will move the inventive method in a situation where by dynamic recalculation of the present control limit the control limit output now provides a reduced threshold of 100 km/h. With this present embodiment now not only this change is displayed and generated and provided as an output but also the change direction is provided by the change direction information. This can be a qualitative change direction information in this case by informing the pilot about a general reduction direction of the minimum aircraft speed. Furthermore, a quantitative change direction can be provided by for example in this case having an information value of a reduction of 20 km/h for the control limit output value of a reduced 100 km/h in forward speed of the aircraft.

It is further an advantage if according to the present invention the method is characterized in that a desired flight situation is determined, wherein at least one desired control limit is calculated for the desired flight status, when further a control suggestion output is provided, comprising desired control input to create desired control limit. A desired flight status can for example be an increased stability, an increased altitude racing weight or similar pieces of information. Based on that desired flight status now the inventive method can calculate if this desired flight status can be reached in a stable manner with the present controllable flight parameters. In particular if this is not the case the desired and the necessary control limits can be calculated for this. If for example, referring again to the example further above, the present speed is a 110 km/h and the inclination angle is for example 10 degrees, a desired flight status can be an increased altitude level. To achieve that increased altitude speed in particular a vertical speed, a pitch angle of for example 20 degrees is necessary. This is at the moment not achievable since it would result in a desired control limit of a minimum forward speed of 120 km/h. According to this embodiment now a control suggestion output is provided being in this case a suggested forward speed value of a 120 km/h and thereby the desired control input would create the desired control limit of the minimum speed of a 120 km/h resulting in an allowable 20 degree pitch as an inclination angle for the aircraft. Based on aforesaid embodiments of the invention this allows a forward facing part of the method and thereby allows a future based control relation and a further increase of stability and transparency to the pilot.

It is further an advantage if according to the present invention the method is characterised in that a present control input is captured, wherein based on the captured present control input the desired flight status is determined and the desired control limit is calculated for the desired flight status, wherein further the desired control limit is compared with the present control input and the comparison result is provided in form of a desired control output. While in the embodiment in the paragraph above the present flight situation is calculated based on the controllable parameters itself this embodiment know starts an interaction with the pilot. In particular an interaction between the present control input, for example the position of the forward speed inceptor is now correlated with the desired control output, for example a desired position of that inceptor. This information as a desired control output can now be for example used to actively moved the inceptor in a position where the desired forward speed is achieved or display, sound signal or further pieces of information can be computed based on that provided desired control output. Again, the present invention provides an additional piece of information in terms of a value data, which can then form a basis of visualisation or any other forms of creating awareness of the pilot.

It is further an advantage if according to the present invention the method is characterised in that in case the present control limit exceeds the desired control limit the control limit output comprises at least one of the following pieces of information:
- Level of limitation of desired control limit,
- Level of sacrifice of related controllable flight parameter.

A foresaid list is nonlimited. In particular the second piece, namely the sacrifice of a related controllable flight parameter is an important value and piece of data which then can form the basis of informing the pilot about this sacrifice of a parameter. In particular a quantitative information and showing the level of the sacrifice of the related controllable flight parameter. This embodiment increases transparency of the influence of the part of automatic control part of the airplane and the acceptance and awareness of the pilot is optimised in that way.

It can be further an advantage if according to the present invention the method is characterized in that the provided control limit output and/or a desired control limit comprises a control influence in particular moving and/or holding an inceptor of the aircraft. It can be a movement against the desired movement or it can be for example a resistance or a vibration feedback information to the pilot. Also, actively movement of inceptors against the control movement, basically forming a resistance or an active movement against the hand of the pilot is in general possible. Also, the movement of one or more inceptors in parallel can show an increased transparency and thereby help to optimize the present method.

It is a further object of the present invention to provide a computer program product comprising instructions which, when executed on a computer cause the computer to perform the steps of an inventive method. Thereby an inventive computer program product comes along with the same advantages as discussed in detail with respect to the inventive method.

It is a further object of the present invention to provide a limitation control device for generating control limit outputs for controlling an aircraft. Such a limitation control device comprises a determination module for determination of the present flight status of the aircraft. Further, a calculation module is provided for calculation of at least one present control limit for a controllable flight parameter of the aircraft being correlated with the determined flight status. Finally, a provision module is provided for providing a control limit output based on the calculated at least one present control limit. The determination module, the calculation module and/or the provision module are configured to carry out a method according to the present invention. Thereby, the limitation control device comes along with the same advantages as discussed in detail with respect to the inventive method.

The present invention is further described in detail with respect to the accompanying drawings. Those show in a schematical way:
- Fig. 1: an embodiment of an inventive limitation device,
- Fig. 2: a typical embodiment of a visual pilot display in an aircraft,
- Fig. 3: the pilot display of figure 2 using the provided control limit output in one embodiment,
- Fig. 4: the embodiment of figure 2 in a further embodiment of the present invention,
- Fig. 5: one possibility of margin information in the present invention,
- Fig. 6: a further embodiment based on figure 5,
- Fig. 7: an embodiment of the present limitation control device,
- Fig. 8: a further embodiment of the present limitation control device,
- Fig. 9: a possible use of the provided control limit output and
- Fig. 10: an embodiment of an inventive aircraft.

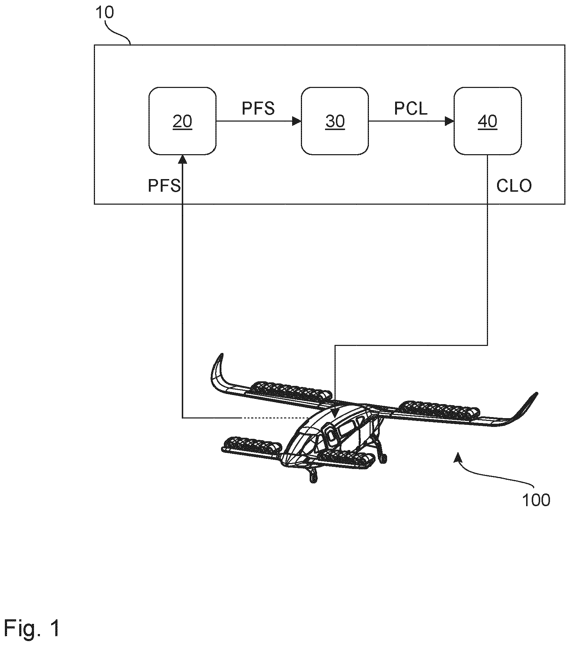

In figure 1 an aircraft 100 is shown which uses a limitation control device 10. In general, and forming the basis of the present invention, a present flight status PFS is determined by the limitation control device. This can for example be a stability related information about the pitch angle and the forward speed of the aircraft 100. Based on that determined present flight status PFS at least one present control limit PCL is calculated based on the calculation module 30. The present control limit PCL is then used in a provision module 40 to not generate a control limit output CLO which is then fed back to the control system of the aircraft 100 and can be used for example to generate further information pieces on that data value in form of the control limit output COL.

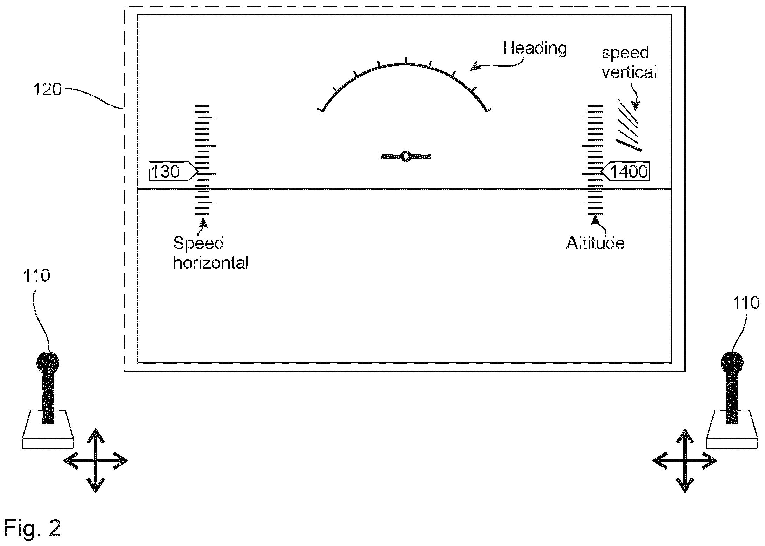

Figure 2 shows a typical insight view in a schematical way of an aircraft 100. Two inceptors 110 are used for controlling the aircraft 100. A pilot display 120 shows different flight information for example controllable flight parameters CFP in form of the horizontal speed on the left side, the altitude on the right side, the vertical speed on the right upper side and the heading in the centre. The horizontal speed in this case is a 130 km/h and the altitude is 1400 meter in height.

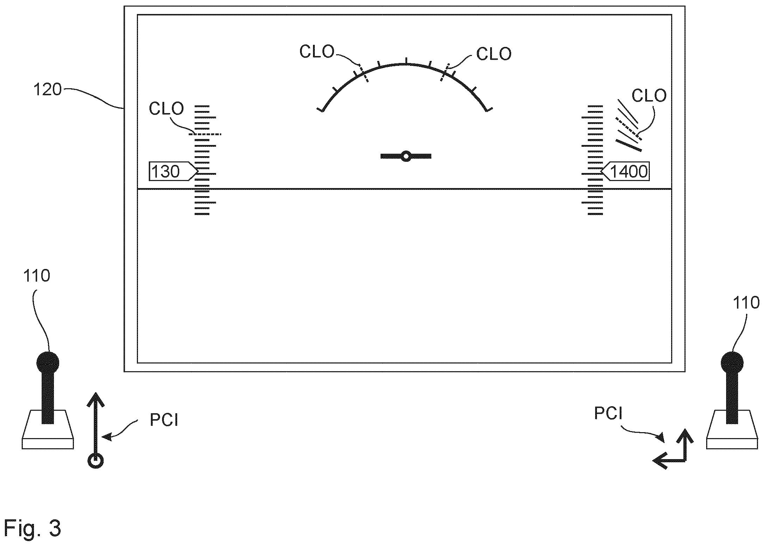

Figure 3 is based on the pilot display of figure 2. Once an inventive method has been carried out, control limit output CLO in terms of threshold values have been calculated. In this case four different control limit outputs have been defined. At the present flight situation PFS there is a maximum vertical speed which is depicted on the right side as a control limit output CLO in form of a maximum threshold value. For the heading two pitch angles, one to the left and one to the right, have been provided as control limit outputs CLO and form maximum thresholds in the heading display of the pilot display 120. Finally on the left side a control limit output CLO has been generated in form of a maximum speed value for the present flight situation PFS. Furthermore, in figure 3 the left inceptor 110 is used as a present control input PCI in forward direction and on the right side in forward and left direction.

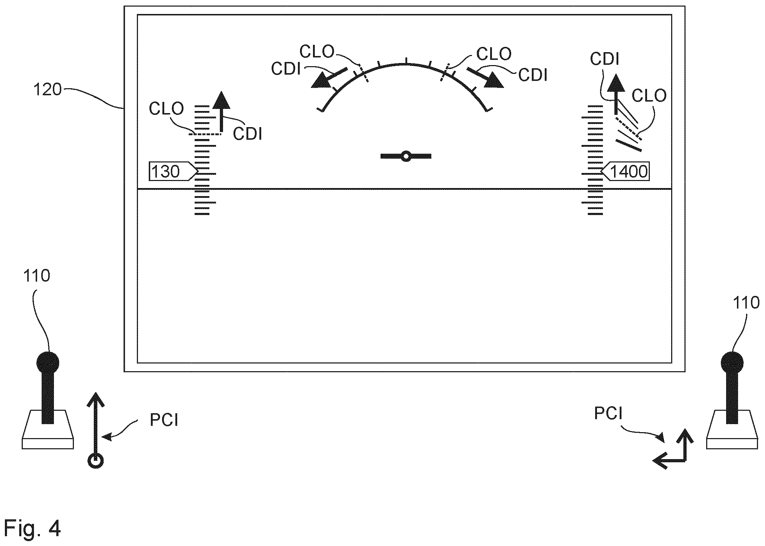

Figure 4 shows the change based on the changed input on the inceptors 110. As it can be seen based on changes of the two inceptors 110 the provided control limit outputs CLO have been changed and moved in a specific direction. The move and the change of the control limit output CLO is visualized here by displaying the further and additional calculated and provided change direction information CDI.

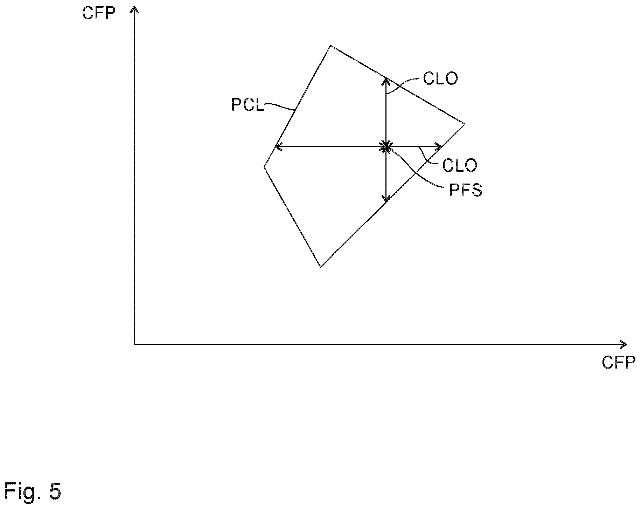

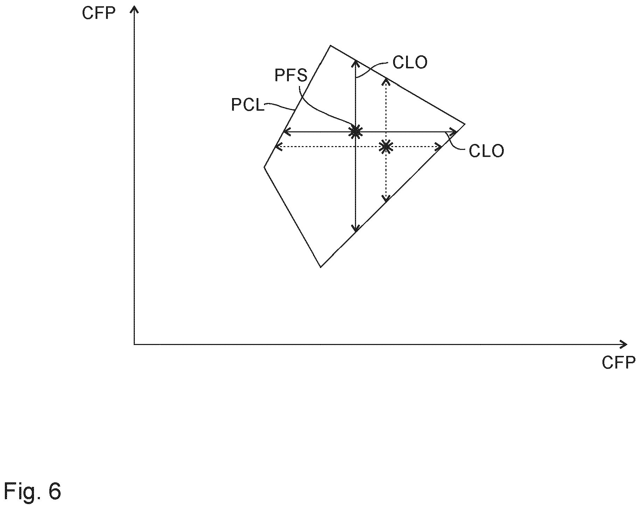

Figures 5 and 6 show what happens in change of the flight situation. In figure 5 the actual present flight situation PFS is depicted in relation to two controllable flight parameters CFP. A four corner square is depicted showing the borders of stable flight situations which are available from the starting point of the present flight situation PFS. The control limit output CLO here is not provided as specific threshold but is provided in forms of margin for the two controllable flight parameters CFP forming in X-direction and in Y-direction of this diagram.

Once the present flight situation PFS has been changed, which is depicted in figure 6, also the control limit outputs have been changed and recalculated dynamically. Now they show again in a margin type of way separate new control limit outputs CLO and now also include a present control limit which is the border of possible and stable present flight situations PFS.

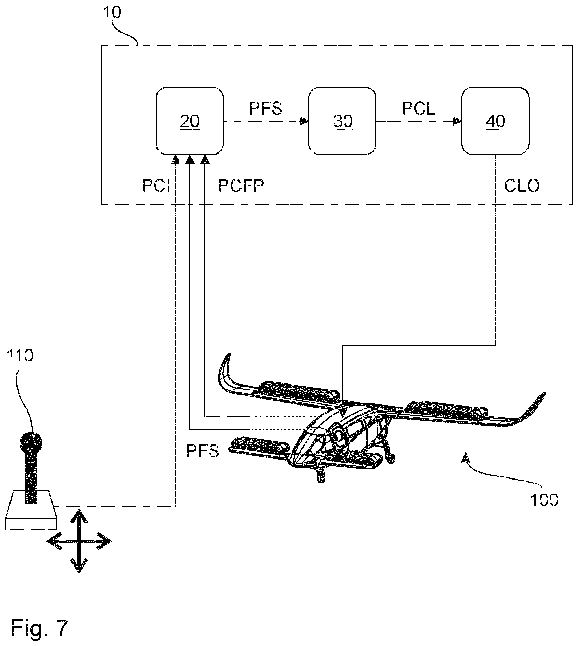

Figure 7 further shows a limitation control device 10. In this case additionally to the present flight situation PFS also a present control input PCI is determined based for example on the position of an inceptor 110. Further additionally a present controllable flight parameter CFP is determined and fed into the determination module 20. This additional input information is helpful to generate a more specific control limit output CLO in this limitation control device 10.

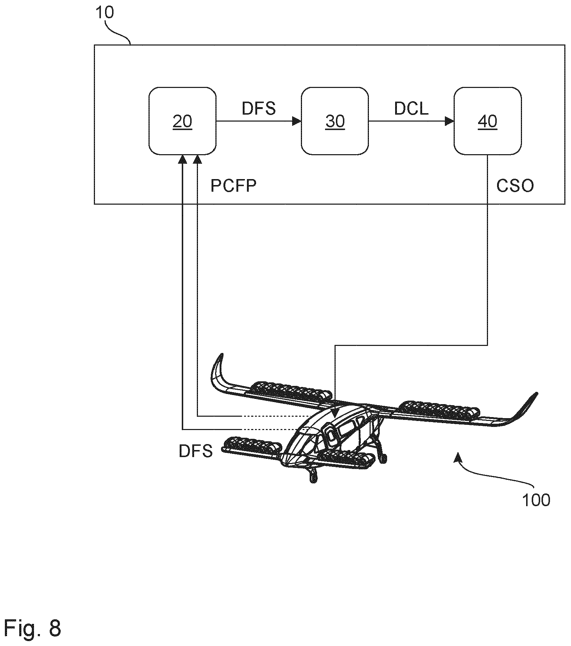

Figure 8 further discloses a situation where a desired flight situation DFS is additionally calculated and determined at the aircraft 100. The limitation control device 10 is now used to calculate a desired flight status DFS and use it to calculate a desired control limit DCL. The output generated by the provision module is now the provision of a value in form of a control suggestion output CSO which can now for example be a suggestion of a new position of the inceptor 110.

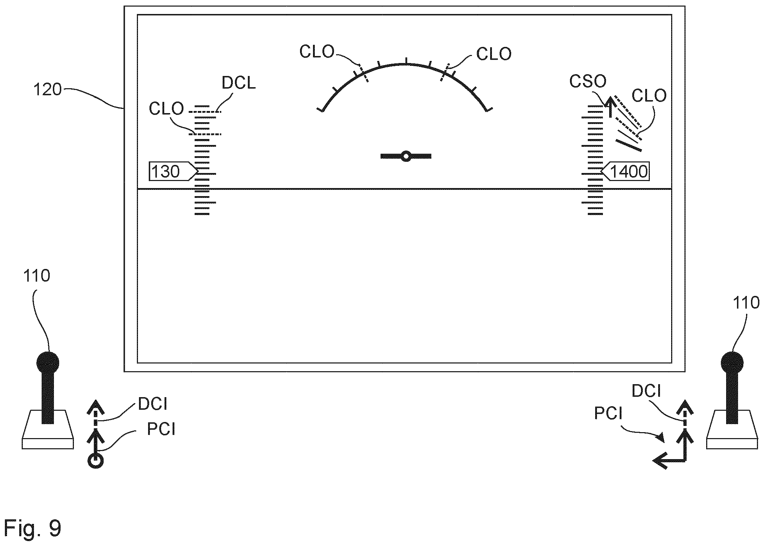

Figure 9 shows such a situation on the lower left and the lower right side. The desired control input DCI which is based on the desired control output DCO is now different from the present control input PCI being defined by the positions of the two inceptors 110. This is further used to a specific display so that the desired control limit DCL is a value that is displayed for the forward speed on the left side of the pilot display 120 as well as a control suggestion output CSO on the right side for the vertical speed.

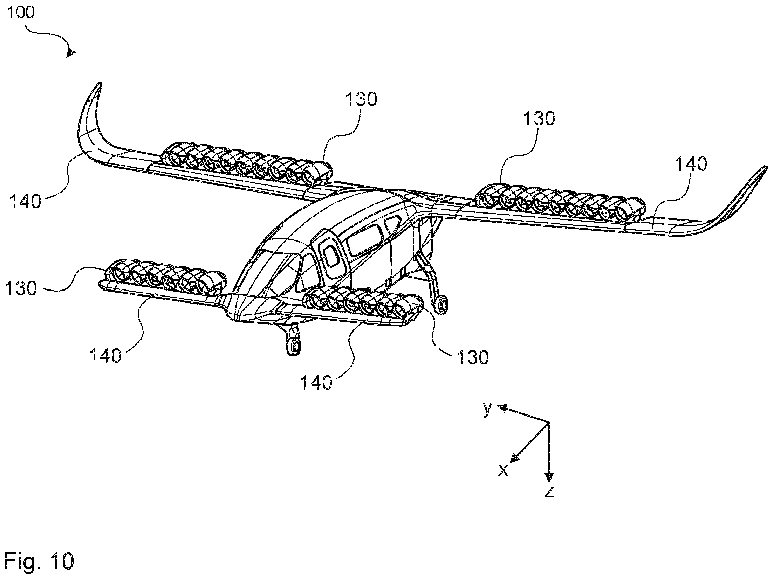

Figure 10 shows in general one modern aircraft 100 with the need of the optimization provided by the inventive method. This is in particular in an electrical vertical take-off and landing aircraft having four wings 140 each being equipped with flaps having multiple engines 130.

Aforesaid discussion of different embodiments describes the present invention only by the way of example.

### Reference signs

- 10: limitation control device
- 20: determination module
- 30: calculation module
- 40: provision module
- 100: aircraft
- 110: inceptor
- 120: Pilot display
- 130: engine
- 140: wing
- CFP: controllable flight parameter
- PCFP: present controllable flight parameter
- PCI: present control input
- DCI: desired control input
- DCO: desired control output
- CDI: change direction information
- CLO: control limit output
- CSO: control suggestion output
- PFS: present flight status
- DFS: desired flight status
- PCL: present control limit
- DCL: desired control limit

## Claims

1. Method for generating control limit outputs (CLO) for controlling an aircraft (100), comprising the following steps:
- Determination of the present flight status (PFS) of the aircraft (100),
- Calculation of at least one present control limit (PCL) for a controllable flight parameter (CFP) of the aircraft (100) corelated with the determined present flight status (PFS),
- Providing a control limit output (CLO) based on the calculated at least one present control limit (PCL).

2. Method according to claim 1, **characterised in that** the at least one present control limit (PCL) is calculated for at least one of the following controllable flight parameters (CFP):
- Engine rotation per minute
- Inclination angle of the aircraft (100)
- Rotation angle of the aircraft (100)
- Yaw angle of the aircraft (100)
- Flap angle
- Vertical speed of the aircraft (100)
- Horizontal speed of the aircraft (100)

3. Method according to any of the preceding claims, **characterised in that** the control limit output (CLO) is provided in a perceptible form, being perceptible by a pilot of the aircraft (100) with at least one of his senses, in particular in at least one of the following forms:
- Tactile
- Visual
- Acoustic

4. Method according to any of the preceding claims, **characterised in that** at least one present control input (PCI) is determined, in particular the position of at least one inceptor (110), and the control limit output (CLO) includes a correlation between the present control limit (PCL) and the present control input (PCI).

5. Method according to any of the preceding claims, **characterised in that** at least one present controllable flight parameter (PCFP) is determined and the control limit output (CLO) includes a correlation between the present control limit (PCL) and the present controllable flight parameter (PCFP).

6. Method according to any of the preceding claims, **characterised in that** a change of the flight situation of the aircraft (100) is determined and respectively a changed at least one present control limit (PCL) is calculated, wherein the provided control limit output (CLO) comprises a change direction information (CDI) corelated with the calculated change of the present control limit (PCL).

7. Method according to any of the preceding claims, **characterised in that** a desired flight status (DFS) is determined, wherein at least one necessary desired control limit (DCL) is calculated for the desired flight status (DFS), wherein further a control suggestion output (CSO) is provided, comprising a desired control input (DCI) to create the desired control limit (DCL).

8. Method according to any of the preceding claims, **characterised in that** a present control input (PCI) is captured, wherein based on the captured present control input (PCI) a desired flight status (DFS) is determined and a desired control limit (DCL) is calculated for the desired flight status (DFS), wherein further the desired control limit (DCL) is compared with the present control input (PCI) and the comparison result is provided in the form of desired control output (DCO).

9. Method according to claim 8, **characterised in that** in case the present control limit (PCL) exceeds the desired control limit (DCL) the control limit output (CLO) comprises at least one of the following pieces of information:
- Level of limitation of desired control limit (DCL)
- Level of sacrifice of related controllable flight parameter (CFS)

10. Method according to any of the preceding claims, **characterised in that** the provided control limit output (CLO) and/or a desired control limit (DCL) comprises a control influence, in particular moving and/or holding an inceptor (110) of the aircraft (100).

11. Computer program product comprising instructions which, when executed by a computer, cause the computer to perform the steps of a method according to any one of claims 1 to 10.

12. Limitation control device (10) for generating control limit outputs (CLO) for controlling an aircraft (100), comprising a determination module (20) for determination of the present flight status (PFS) of the aircraft (100), an calculation module (30) for calculation of at least one present control limit (PCL) for a controllable flight parameter (CFP) of the aircraft (100) corelated with the determined present flight status (PFS), and a provision module (40) for providing a control limit output (CLO) based on the calculated at least one present control limit (PCL), wherein the determination module (20), the calculation module (30) and/or the provision module (40) are configured to carry out a method according to claims 1 to 10.
